# EUROPÄISCHE PATENTSCHRIFT

(11) **EP 2 674 079 B1**
(45) Veröffentlichungstag und Bekanntmachung des Hinweises auf die Patenterteilung: **30.07.2014**
(21) Anmeldenummer: 13171853.8
(22) Anmeldetag: 13.06.2013
(51) Int. Cl.: A47J 27/09

(54) **Druckgargerät**
Pressure cooker
Appareil de cuisson sous pression

(30) Priorität: 14.06.2012 DE 102012011680
(43) Veröffentlichungstag der Anmeldung: 18.12.2013
(73) Patentinhaber: MKN Maschinenfabrik Kurt Neubauer GmbH & Co. KG, 38300 Wolfenbüttel (DE)
(72) Erfinder: Boczaga, Jörg, 38304 Wolfenbüttel (DE); Hörster, Kay, 38106 Braunschweig (DE); Kaczmarczyk, Marian, 38154 Königslutter (DE); Ruhe, Dirk, 38667 Bad Harzburg (DE)
(74) Vertreter: Strobel, Wolfgang

(56) Entgegenhaltungen:
- DE-U1- 20 113 356
- JP-A- H0 678 851

## Beschreibung

### Gebiet der Erfindung

Die vorliegende Erfindung betrifft ein Gargerät zum Garen einer flüssigen oder einer einen hohen Flüssigkeitsanteil enthaltenden Speise mit einer Gargerätevorderseite und einer Gargeräterückseite mit folgenden Elementen: einem Tiegel, einem Deckel für den Tiegel, einem Druckraum in dem Tiegel mit einer Druckfestigkeit, mindestens einer Schutzeinrichtung und einer Verriegelungsvorrichtung.

Die vorliegende Erfindung betrifft außerdem ein Verfahren zum Auslösen von Schutzeinrichtungen eines Gargerätes zum Garen einer flüssigen oder einen Flüssigkeitsanteil enthaltenden Speise.

### Stand der Technik

Gargeräte zum Garen von flüssigen oder Flüssigkeit enthaltenden Speisen, welche den Garvorgang mit erhöhtem Druck ermöglichen, sind seit langem bekannt und werden vielfältig angewendet. Insbesondere zeichnen sie sich durch eine schonende und energiesparende Zubereitung der Speisen aus.

Beim Erhitzen von flüssigen oder Flüssigkeit enthaltenden Speisen in dicht verschlossenen Behältnissen, beispielsweise einem Druckgargerät, entsteht ein erhöhter Druck, der beim Überschreiten eines konstruktiv bedingten Grenzwertes für die Druckbelastung zurexplosionsartigen Zerstörung des Behältnisses führen kann.

Daher ist es wesentlich, dass das heiße und unter erhöhtem Druck stehende Gargerät sicher und mit möglichst hoher Zuverlässigkeit bedienbar ist.

Aus der DE 201 13 356 U1 ist beispielsweise die Verwendung einer Lippendichtung für Dampfdrucktöpfe bekannt. Die Lippendichtung weist einen im Wesentlichen U-förmigen Querschnitt auf und umfasst einen zentralen Abschnitt sowie einen unteren und oberen Lippenabschnitt. Eine solche Lippendichtung gestattet regelmäßig das sichere und dauerhaft zuverlässige Abdichten des Gargefäßes.

Das zuverlässige Abdichten des Druckraumes eines Druckgargerätes erfordert allerdings auch das Vorhandensein von Schutzeinrichtungen zur Vermeidung von Überlastungen durch einen entstehenden Überdruck im Inneren des Gargerätes, durch den eine Gefährdungssituation für die Umgebung bzw. für das Bedienungspersonal eintreten kann.

Bekannte Schutzeinrichtungen (im Weiteren auch als Sicherheitseinrichtungen bezeichnet) zur Vermeidung einer solchen Situation sind u. a. Sicherheitsventile, die bei Erreichen eines vorgegebenen Schwellwertes des Druckes auslösen und einen Weg für ein Entweichen des Überdruckes freigeben.

Sollten diese Schutz- bzw. Sicherheitseinrichtungen jedoch versagen, kann es bei einem ungesteuerten Entweichen des Druckes oder einer Explosion des Behältnisses zu schweren Schäden bis hin zu unter Umständen tödlichen Gefährdungen der Anwender kommen.

Aus der JP 06 07 8851 A ist ein Gargerät in Form eines Schnellkochtopfs bekannt, bei dem zwischen Druckraum und Deckel konstruktiv eine mechanische Sollversagensstelle vorhanden ist, die als eine ganz oder teilweise umlaufende Dichtung ausgebildet ist, wobei ein Auslösen der mechanischen Sollversagensstelle erfolgt, wenn ein auf die Dichtung einwirkender Druck aus dem Druckraum einen vorgegebenen Schwellenwert übersteigt, derart, dass die ganz oder teilweise umlaufende Dichtung in zumindest einem Teilbereich aus ihrer abdichtenden Position herausgedrückt wird, wodurch der Überdruck entweicht, wobei der vorgegebene Schwellenwert einem Überdruck im Druckraum entspricht, der geringer ist als ein Überlassdruck der Verriegelungsvorrichtung oder ein Grenzbereich der Druckfestigkeit des Druckraumes.

### Aufgabe

Aufgabe der vorliegenden Erfindung ist es, ein Gargerät zum Garen von flüssigen oder Flüssigkeit enthaltenden Speisen unter erhöhtem Druck anzugeben, bei welchem erhöhte Sicherheitsstandards erfüllt werden können. Insbesondere soll eine Explosion" des Gargerätes aufgrund eines zu hohen Druckes auch nach Versagen von vorhandenen Schutzeinrichtungen sicher vermieden werden.

Eine weitere Aufgabe der vorliegenden Erfindung ist es, ein Verfahren zum Auslösen einer weiteren Schutzeinrichtung eines derartigen Gargerätes vorzuschlagen, das ebenfalls erhöhten Sicherheitsstandards Rechnung trägt, deren Auslösen nach Versagen von Sicherheitseinrichtungen für geringe Drücke eine "Explosion" des Druckgargerätes sicher verhindert.

### Lösung

Die erste Aufgabe betreffend das Gargerät wird durch die Erfindung dadurch gelöst, dass die zwischen dem Druckraum und dem Deckel als mechanische Sollversagensstelle angeordnete Dichtung ein elastisches Material aufweist, wobei die Dichtung derart ausgestaltet ist, dass sie bogenförmig in Druckrichtung zeigt und bei einem Druck gleich oder größer als der dritte Schwellenwert nach außen überklappt, dass der Deckel so ausgebildet ist, dass er sich bei steigendem Druck im Druckraum im Tiegel minimal elastisch verformt, wobei sich durch die Verformung das Spaltmaß der Dichtung an zumindest einer Stelle vergrößert, und dass die Dichtung derart ausgestaltet ist, dass sie bei einem Druck gleich oder größer als der dritte Schwellenwert zuerst an dieser Stelle nach außen klappt.

Die zweite Aufgabe wird gelöst durch ein Verfahren zum Auslösen von Schutzeinrichtungen eines Gargerätes zum Garen einer flüssigen oder einer einen hohen Flüssigkeitsanteil enthaltenden Speise unter erhöhtem Druck mit folgenden Schritten: Erhitzen der Speise in einem mit einem Deckel verschlossenen Druckraum des Gargeräts, wodurch im Druckraum ein Druck ansteigt, der sich bis auf einen Wert eines vorgegebenen Betriebsdruckes erhöht; Druckentlasten des Druckraums durch ein Druckabbauventil als eine erste Schutzeinrichtung bei Erreichen eines ersten Schwellenwertes Sw₁ für den Druck; Auslösen eines Sicherheitsventils als eine zweite Schutzeinrichtung bei einem weiteren Ansteigen des Druckes und Erreichen eines zweiten Schwellenwertes Sw₂; bei einem Ausfall der ersten und der zweiten Schutzeinrichtung und einem weiteren Ansteigen eines durch die erste und die zweite Schutzeinrichtung nach außen aus dem Druckraum nicht mehr abführbaren Druckes, Auslösen einer konstruktiv vorgesehenen mechanischen Sollversagensstelle bei Erreichen eines dritten Schwellenwertes Sw₃, wobei der dritte Schwellenwert Sw₃ geringer ist, als ein vorgegebener Wert für eine Druckfestigkeit des Gargeräts, und wobei ein Auslösen der mechanischen Sollversagensstelle erfolgt, bevor eine Verriegelungsvorrichtung des Gargerätes überlastet wird, wobei eine als mechanische Sollversagensstelle ausgebildete Dichtung, welche derart ausgestaltet ist, dass sie bogenförmig in Druckrichtung zeigt, bei Erreichen oder Überschreiten des dritten Schwellenwertes nach außen überklappt, und minimal elastisches Verformen des Deckels bei steigendem Druck, wobei sich durch die Verformung das Spaltmaß der Dichtung an zumindest einer Stelle vergrößert und diese Stelle als erste nach Erreichen des dritten Schwellenwerts Sw₃ nach außen klappt.

Mit dem erfindungsgemäßen Gargerät und dem erfindungsgemäßen Verfahen zum Auslösen von Schutzeinrichtungen bei einem Gargeät wird vorteilhafterweise erreicht, dass ein unzulässiger Überdruck im Druckraum bzw. Garraum des Geräts nach Versagen von zwei Schutzeinrichtungen über die dritte Schtzeinrichtung kontrolliert abgelassen werden kann und ein explosionsartiges Versagen des Gargeräts damit sicher vermieden werden kann.

Gemäß einer bevorzugten Ausführungsform der Erfindung wird ein Teilbereich der Dichtung geschaffen, in dem die Dichtung herausgedrückt wird. Hierzu wird der Deckel des Tiegels, der den Gargerätedeckel bildet, aus einem Material hergestellt und/oder in einer speziellen Form ausgebildet, die dazu führt, dass unter Druck im Tiegel eine minimale elastische Verformung entsteht. Durch diese elastische Verformung des großflächigen Deckels des Tiegels erhöht sich das Spaltmaß der Dichtung. Durch die Ausgestaltung des Deckels und der Verriegelung kann der Teilbereich festgelegt werden, in dem die Spaltvergrößerung der Dichtung auftritt.

Der Begriff Sollversagensstelle umfasst den gängigen Begriff einer "Sollbruchstelle". Bei genauer Betrachtung "bricht" an dieser Stelle jedoch nichts, sondern es wird ein bevorzugt elastisches Material aus einer abdichtenden Stellung herausgedrückt, um den gewünschten Sicherheitseffekt zu erreichen. Dieses elastische Element als Teil einer umlaufenden Dichtung "versagt" an dieser Stelle dadurch, dass es seine abdichtende Wirkung aufgibt zugunsten des aus Sicherheitsgründen hier angestrebten Druckabbaus.

Vorteilhafterweise weist die Gargerätevorderseite eine Schürze auf, in die die Verriegelungsvorrichtung integriert ist.

Weiterhin ist vorteilhaft, dass die als Dichtung ausgebildete mechanische Sollversagensstelle bei einer Drucküberlastung zuerst an der Gargeräterückseite auslöst. Dies führt vorteilhafterweise zur Unfallvermeidung, weil sich der abgelassene Überdruck vom Bereich der Bedienungspersonen weg entlädt.

Vorteilhafterweise weist das erfindungsgemäße Gargerät einen Drucksensor und mehrere Schutzeinrichtungen auf, wobei für ein Auslösen der Schutzeinrichtungen mittels Verwendung des Drucksensors des Gargeräts mindestens drei voneinander unterschiedliche Schwellenwerte für die auf die Schutzeinrichtungen einwirkenden Druck vorgegeben sind, wobei jeder Schutzeinrichtung nur einer der drei unterschiedlichen Schwellenwerte zugeordnet ist, der erste Schwellenwert in einer Gerätesteuerung hinterlegt ist, ein Sicherheitsventil als zweite Schutzeinrichtung vorgesehen ist und so ausgebildet ist, dass es bei Erreichen des zweiten Schwellenwertes auslöst, und die Konstruktion der als Dichtung ausgebildeten mechanischen Sollversagensstelle derart ausgestaltet ist, dass ihre mechanische Auslösung bei Erreichen des dritten Schwellenwertes für den Druck erfolgt.

Weiterhin weist das erfindungsgemäße Gargerät vorteilhafterweise ein Druckabbauventil als weitere Schutzeinrichtung für einen Druckabbau auf, wobei die Schutzeinrichtungen derart ausgestaltet sind, dass bei einem Ansteigen des Drucks von einem niedrigeren Wert zu einem höheren Wert die Schutzeinrichtungen in der Reihenfolge ausgelöst werden:
a) bei einem ersten Schwellenwert Sw₁ das Druckabbauventil für einen Druckabbau;
b) bei einem zweiten, gegenüber dem ersten höheren, Schwellenwert Sw₂ das Sicherheitsventil, und
c) bei einem dritten, gegenüber dem zweiten höheren, Schwellenwert Sw₃ die als Dichtung ausgebildete mechanische Sollversagensstelle,
c1) wobei der Schwellenwert Sw₃ für das Auslösen der mechanischen Sollversagensstelle niedriger vorgegeben ist, als ein für eine Druckfestigkeit des Gargeräts vorgegebener Wert.

Vorteilhafterweise kann die Druckabbauleitung für das Druckabbauventil und für das Sicherheitsventil gemeinsam genutzt werden.

Vorteilhafterweise ist das Druckabbauventil als Kugelventil ausgebildet.

Weiterhin ist vorteilhafterweise das erfindungsgemäße Gargerät derart ausgebildet, dass die Schürze an der Gargerätevorderseite derart ausgestaltet ist, dass sie über die Dichtung herüberreicht, dass die in die Schürze integrierte Verriegelungsvorrichtung den Deckel an der Gargerätevorderseite auch bei einem hohen Druck stark auf die Dichtung presst, und dass sich bei einem Druck, der deutlich höher als ein vorgegebener Arbeitsdruck ist, der Deckel leicht nach oben wölbt und sich an der Gargeräterückseite minimal anhebt, wodurch die Dichtung im Bereich der Gargeräterückseite zuerst auslöst.

Vorteilhafterweise erfolgt das Umklappen der Dichtung derart, dass ein im Druckraum vorhandener Überdruck zwischen dem Druckraum und dem Deckel entweichen kann, bevor die Verriegelungsvorrichtung überlastet wird.

Mittels der erfindungsgemäßen, konstruktiv vorgesehenen Schwachstelle in Form der mechanischen Sollversagensstelle (Dichtung) wird das Gefahrenpotenzial für den Eintritt eines Schadens eingegrenzt. Dazu ergänzend können zur Verringerung des Gefahrenpotenzials auch noch der Druckraum (Garraum), der Deckel sowie die Verriegelung konstruktiv für einen höheren Druck ausgelegt werden.

Die Sollversagensstelle wird dann aktiviert (ausgelöst), wenn beispielsweise die übrigen Schutzeinrichtungen eines solchen Gargerätes, wie Sicherheitsventile o. ä., versagen sollten. Dabei ist die mechanische Sollversagensstelle konstruktiv so ausgestaltet, dass das Gefährdungspotenzial für die Bedienung, die Umgebung und das Gargerät weitestgehend reduziert wird.

Vorteilhaft ist, wenn für ein Auslösen der Schutzeinrichtungen mittels des Drucksensors des Gargerätes mindestens drei voneinander unterschiedliche Schwellenwerte für den auf die Schutzeinrichtungen einwirkenden Druck vorgegeben sind. Jeder der Schutzeinrichtungen (Kugelventil, Sicherheitsventil, mechanische Sollversagensstelle) ist dabei nur einer der drei unterschiedlichen Schwellenwerte zugeordnet.

Die zwei ersten voneinander unterschiedlichen Schwellenwerte werden in einer Ausführungsform der Erfindung dabei zweckmäßigerweise in einer Gerätesteuerung für das Gargerät hinterlegt, während die Konstruktion der mechanischen Sollversagensstelle derart ausgestaltet ist, dass ihre mechanische Auslösung bei Erreichen des dritten Schwellenwertes für den Druck erfolgt.

Dabei ist die Konstruktion der als mechanische Sollversagensstalle vorgesehenen Dichtung zwischen Druckraum und Deckel an den dritten Schwellenwert für den Druck angepasst und wird unabhängig von einer Gerätesteuerung bei Erreichen des dritten Schwellenwertes ausgelöst.

In einer alternativen Ausführungsform werden alle drei Schwellenwerte in der Gerätesteuerung hinterlegt. Bei einer derartigen Version kann von der Gerätesteuerung aus noch zusätzlich auch auf die mechanische Sollversagensstelle ein Einfluss ausgeübt werden. Dies bietet unter bestimmten Voraussetzungen Vorteile, etwa durch eine weitere Einflussnahme auf das konkrete mechanische Verhalten der Sollversagensstelle.

Der gespeicherte Schwellenwert für das Sicherheitsventil kann mit einem gemessenen Druckwert verglichen werden, um beispielsweise bei einem werksseitigen Sicherheitsventiltest den Schwellwert abzuprüfen.

Von Vorteil ist es, wenn die Schutzeinrichtungen des Gargerätes derart ausgestaltet sind, dass bei einem Ansteigen des Druckes von einem niedrigeren Wert zu einem höheren Wert die Schutzeinrichtungen in der Reihenfolge ausgelöst werden:
a) bei einem ersten Schwellenwert das Druckabbauventil (beispielsweise ein Kugelventil) für einen Druckabbau;
b) bei einem zweiten, gegenüber dem ersten höheren, Schwellenwert das Sicherheitsventil, und
c) bei einem dritten, gegenüber dem zweiten höheren, Schwellenwert die als Dichtung ausgebildete mechanische Sollversagensstelle. Der Schwellenwert für das Auslösen der mechanischen Sollversagensstelle ist dabei niedriger vorgegeben, als ein für die Druckfestigkeit des Gargerätes vorgegebener Wert.

Dabei ist der erste Schwellenwert etwa dem Normalbetrieb des Gargerätes zuzuordnen. Erst dann, wenn diese Funktionsweise nicht den gewünschten Effekt liefert, also gewissermaßen ein "Störfall I" eintritt, tritt der zweite Schwellenwert in Erscheinung.

Und erst dann, wenn auch dieser "Störfall I" nicht wunschgemäß behoben werden kann, und der Druck über das Sicherheitsventil nicht abgebaut wird, tritt der dritte Schwellenwert in Erscheinung und ist demzufolge einem "Störfall II" zuzuordnen.

Beispielsweise kann der Deckel an der Gargerätevorderseite durch die Verriegelung angepresst werden, so dass sich das Spaltmaß an der dem Benutzer abgewandten Gargeräterückseite vergrößert. Die Dichtung richtet sich daraufhin an dieser Position aus einer stark nach innen umgebogenen Stellung auf, bis sie dem entgegenwirkenden Druck nicht mehr standhalten kann.

Bei anderen Ausführungsformen, die beispielsweise bei kleineren Gargeräten bevorzugt eingesetzt werden, kann man eine ähnliche Konzeption wählen, bei der der Teilbereich und das vergrößerte Spaltmaß an der Seite des Tiegels entsteht. Dies berücksichtigt insbesondere, dass bei diesen kleineren Geräten die Vorderseite und die Rückseite vergleichesweise kurz sind.

Die Dichtung kann üblicherweise als Dichtring ausgebildet sein. Die Dichtung ist dabei in ihrer geometrischen Form an die geometrische Form (Kreisform, rechteckig, oval o. ä.) und Abmaße der Fläche der zu verschließenden Öffnung zwischen Druckraum und Deckel des Gargerätes angepasst.

Es ist auch von Vorteil, dass die Schürze an der Gargerätevorderseite (Frontbereich des Gargerätes) derart ausgestaltet ist, dass sie über die Dichtung (Dichtring; Dichtungsbereich) herüberreicht. Dadurch presst die in die Schürze integrierte Verriegelung den Deckel an der Gargerätevorderseite auch bei einem hohen Druck stark auf die Dichtung. Bei einem Druck, deutlich höher als ein vorgegebener Arbeitsdruck, wölbt sich der Deckel leicht nach oben und hebt sich an der Gargeräterückseite minimal an, was bewirkt, dass der Dichtring (Dichtung) im Bereich der Gargeräterückseite zuerst auslöst.

Daraus resultiert, dass bei einem Versagen der übrigen Schutzeinrichtungen die Dichtung nachgibt (auslöst), ohne dass ein vor dem austretenden heißen Wrasen (Kochdunst; sichtbar werdender Wasserdampf, der beim Kochen beispielsweise auch Fettbestandteile enthält) getroffen wird.

Selbst bei einem umlaufenden Wrasenaustritt würde eine in dieser Form gestaltete Schürz den Bereich vor dem Gargerät noch vor einem direkten Auftreten dieser Wrasen bewahren.

Dabei ist die mechanische Sollversagensstelle als eine Dichtung zwischen dem Druckraum und dem Deckel des Gargerätes ausgebildet. Der für das Auslösen der Sollversagensstelle vorgegebene dritte Schwellenwert ist hierbei geringer als ein vorgegebener Wert für die Druckfestigkeit des Gargerätes. Das Auslösen der mechanischen Sollversagensstelle erfolgt somit, bevor eine bei dem Gargerät vorhandene Verriegelung überlastet wird. Die als Dichtung ausgebildete mechanische Sollversagensstelle wird dabei bevorzugt zuerst an der Rückseite des Gargerätes ausgelöst.

Die Druckentlastung mittels des Ventils (Kugelventils) bei Erreichen des ersten Schwellenwertes dient, neben der Funktion als Schutzeinrichtung, auch zur Regelung des Betriebsdruckes des Gargerätes.

Der Vorteil des erfindungsgemäßen Gargerätes besteht somit insbesondere darin, dass durch das Vorhandensein der Sollversagensstelle bei einem Versagen der anderen Schutzvorrichtungen des Gargerätes eine mögliche "Explosion" des Gerätes verhindert wird, und eine Gefährdung des Bedienungspersonals und der Umgebung des Gerätes weitestgehend ausgeschlossen ist.

Weitere Einzelheiten und Merkmale ergeben sich aus der nachfolgenden Beschreibung eines bevorzugten Ausführungsbeispiels unter Bezugnahme auf die Zeichnung. Im Einzelnen zeigt:
- Fig. 1: eine schematische Darstellung einer Ausführungsform des erfindungsgemäßen Gargerätes;
- Fig. 2: einen schematischen Schnitt durch eine bevorzugte Ausführungsform des erfindungsgemäßen Gargerätes;
- Fig. 3: einen Ausschnitt aus der Fig. 2 während eines Garvorganges;
- Fig. 4: den Ausschnitt aus der Fig. 3 bei einem anderen Zeitabschnitt des Garvorganges;
- Fig. 5: den Ausschnitt aus den Figuren 3 und 4 bei einem weiteren Zeitabschnitt des Garvorganges; und
- Fig. 6: eine grafische Darstellung der Druckabstufungen im Sicherheitskonzept des Gargerätes aus Fig. 1.

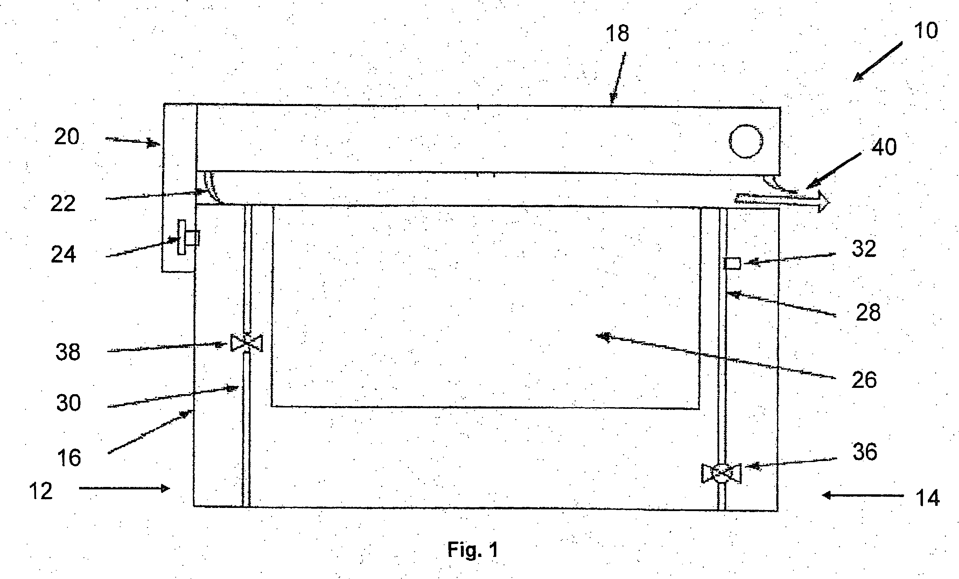

Das in der schematischen Darstellung der Fig. 1 gezeigte Gargerät 10 weist einen Tiegel 16 mit einem Druckraum 26, einen Deckel 18 für den Tiegel 16 und eine Mehrzahl von Schutzeinrichtungen auf.

An der Gargerätevorderseite 12 ist eine Schürze 20 angeordnet, in die eine Verriegelungsvorrichtung 24 integriert ist. Ebenso an der Gargerätevorderseite 12 sind ein Sicherheitsventil 38 als Schutzeinrichtung und eine Druckabbauleitung 30 für das Sicherheitsventil 38 angeordnet.

An der Gargeräterückseite 14 sind ein Drucksensor 32, ein Druckabbauventil 36 als Schutzeinrichtung für einen Druckabbau und eine Druckabbauleitung 28 für das Druckabbauventil 36 angeordnet. Auch ganz andere Anordnungen beziehungsweise Positionen für diese hier erwähnten Elemente sind in anderen Ausführungsformen möglich.

Zwischen dem Druckraum 26 des Tiegels 16 und dem Deckel 18 des Gargerätes 10 ist die Dichtung 22 angeordnet, die bei Erreichen und/oder Überschreiten eines vorgegebenen Schwellenwertes für den Druck im Druckraum 26 des Gargerätes 10 als mechanische Sollversagensstelle wirkt.

Der Drucksensor 32, in Verbindung beispielsweise mit einer Gerätesteuerung (nicht dargestellt), bewirkt, dass bei Erreichen des ersten Schwellenwertes für den Druck im Druckraum 26 zunächst das Druckabbauventil 36 öffnet. Bei einem weiteren Druckanstieg löst das Sicherheitsventil 38 aus, um dem nicht gewünschten und gefährlichen Überdruck Rechnung zu tragen.

Die Schürze 20 an der Vorderseiten12 des Gargerätes 10 überdeckt einen Bereich der Dichtung 22 des Gargerätes 10. Bei einem Versagen der beiden vorgenannten Schutzeinrichtungen 36, 38 und einem dadurch zu hohen Überdruck im Druckraum 26 des Gargerätes 10 presst die in die Schürze 20 integrierte Verriegelungsvorrichtung 24 auch bei einem hohen Druck den Deckel 18 stark auf die Dichtung 22. Bei einem Druck, deutlich über dem Arbeitsdruck, wölbt sich der Deckel 18 leicht nach oben und hebt sich rückseitig minimal an. Die Dichtung 22 wird dadurch bei Erreichen des vorgegebenen Schwellenwertes für die Sollversagensstelle an der Rückseite 14 des Gargerätes 10 zuerst auslösen. Dadurch wird erreicht, dass die Wrasen-Ableitung 40 in erster Linie zur Gargeräterückseite 14 hin erfolgt und eine Gefährdung eines Benutzers oder Bedieners durch heißen Wasserdampf weitestgehend verhindert wird.

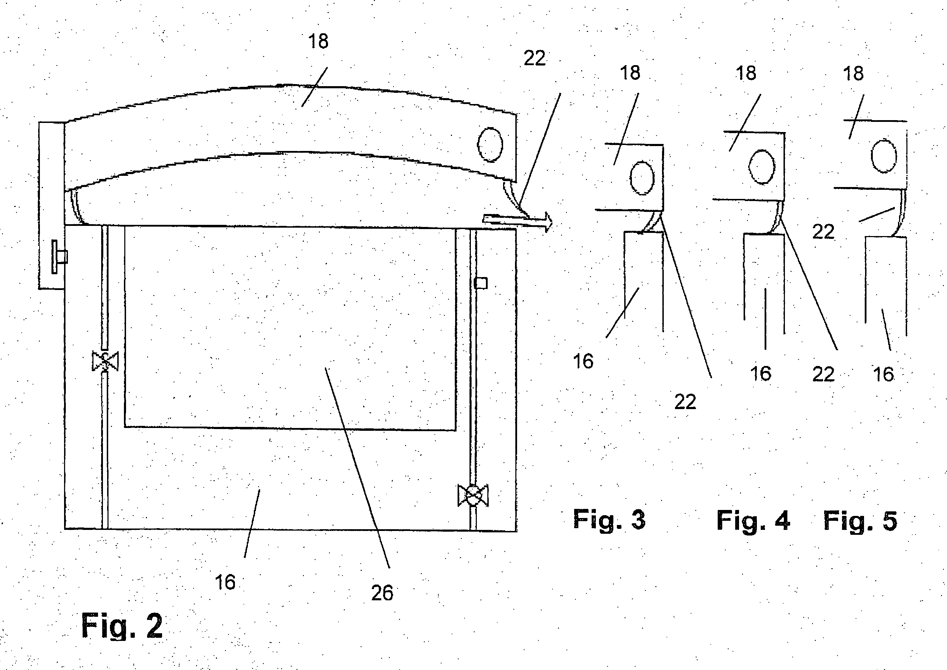

In Fig. 2 ist eine bevorzugte Ausführungsform des erfindungsgemäßen Gargerätes 10 dargestellt. Die Funktionsweise und der Aufbau entsprechen weitgehend dem in Fig. 1, auf die insoweit verwiesen wird.

Im Unterschied zu der Ausführungsform aus Fig. 1 sieht man den Tiegel 16 mit seinem Deckel 18 sowie den Druckraum 26. Zwischen dem Deckel 18 und der Wandung des Tiegels 16 befindet sich wiederum eine umlaufende Dichtung 22, die in dem dargestellten Schnitt auf beiden Seiten unterhalb des Deckels gut zu erkennen ist. Diese Dichtung 22 ist elastisch.

In Fig. 2 ist die Situation dargestellt, wenn der Druck im Druckraum 26 bereits eine erhebliche Höhe erreicht hat. Man erkennt, dass sich der Deckel 18 elastisch verformt und leicht durchgebogen hat. Diese Durchbiegung des Deckels unter Druckbelastung ist in der Fig. 2 allerdings sehr stark übertrieben dargestellt. Durch konstruktive Maßnahmen, also die konkrete Wahl der Konstruktion des Deckels 18 und der oberen Wandung des Tiegels 16 und durch entsprechende Auswahl des Materials insbesondere des Deckels 18 kann die konkrete Ausbildung dieser elastischen Verformung vorgegeben werden. Mit anderen Worten, ein wesentliches Element der vorliegenden Erfindung ist, bewusst eine definierte Verformung zuzulassen anstatt den Deckel weiter zu versteifen.

In Fig. 3 ist der Bereich aus dem rechten oberen Abschnitt der Fig. 2 dargestellt. Zu erkennen ist der obere Rand der Wandung des Tiegels 16 sowie darüber der rechte Rand des Deckels 18. Zwischen dem Deckel 18 und dem Tiegel 16 ist die Dichtung 22 zu erkennen, die den kleinen bestehenden Spalt abdichtet und so dafür sorgt, dass der auf der linken Seite des dargestellten Bereichs zu denkende Druckraum 26 abgedichtet ist.

Die Darstellung in Fig. 4 entspricht jener von Fig. 3, jedoch mit dem Unterschied, dass der Spalt zwischen dem oberen Rand der Wandung des Tiegels 16 und dem Deckel 18 durch weiteren Druckaufbau etwas größer geworden ist. Das liegt im Wesentlichen an der in der Fig. 2 angedeuteten Durchbiegung des Deckels 18. Die Dichtung 22 richtet sich etwas auf, dichtet den Druckraum 26 aber unverändert gegenüber dem Außenraum ab.

In Fig. 5 ist die vergleichbare Darstellung zu den Fig. 3 und 4 dargestellt, jedoch in der Situation, in der der Druck im Druckraum 26 weiter zugenommen hat. Der Spalt zwischen dem Deckel 18 und der Wandung des Tiegels 16 hat sich nochmals vergrößert, er wird aber unverändert von der Dichtung 22 abgedichtet.

Bezugnehmend erneut auf die Darstellung von Fig. 2, ist dort die Situation gezeigt, in der der Druck im Druckraum 26 den dritten Schwellenwert überschritten hat. Der Druck im Druckraum 26 ist jetzt so groß, dass in diesem Teilbereich des Umfanges des oberen Randes des Tiegels 16 die Dichtung 22 nach außen umklappt. Auf diese Weise wird es möglich, den unter zu hohem Druck stehenden gasförmigen Inhalt im Druckraum 26 zumindest zu einem Teil entweichen zu lassen und auf diese Weise den Druck im Druckraum 26 abzubauen.

Diese Entwicklung ist reversibel, so dass der Tiegel 16 und der Deckel 18 nach diesem Vorgang erneut benutzt werden können, gegebenenfalls nach einer entsprechenden Überprüfung.

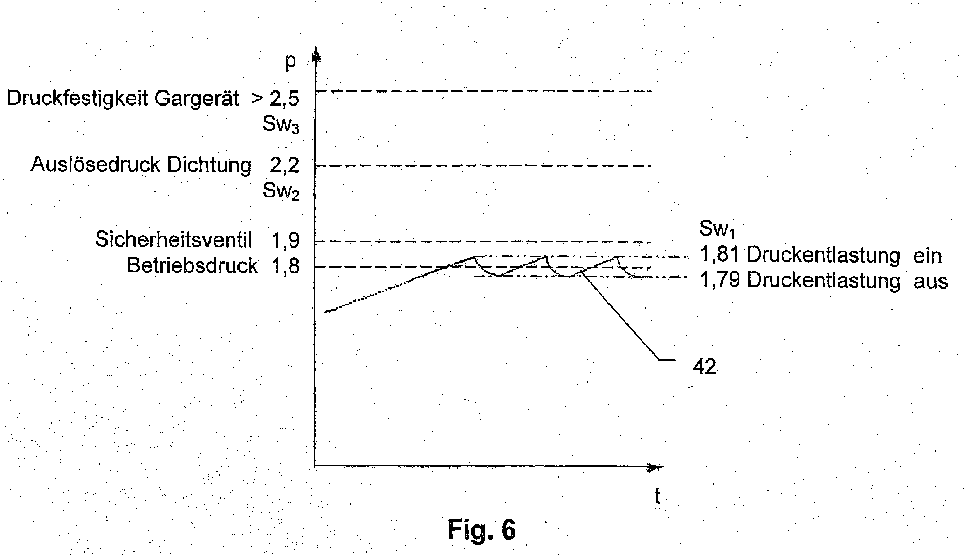

Die im Sicherheitskonzept des Gargerätes vorgesehenen drei Druckabstufungen (Schwellenwerte Sw₁, Sw₂ und Sw₃) werden in Fig. 6 grafisch dargestellt. Die im Folgenden angegebenen Zahlenwerte sind rein beispielhaft. Sie sollen eine realistische Größenordnung angeben und das Verständnis erleichtern. Selbstverständlich sind gemäß der Erfindung auch andere Schwellenwerte möglich.

Der erwähnte erste Schwellenwert Sw₁ ist beispielsweise auch etwas höher einzustellen als der aktuell eingestellte Betriebsdruck. Ist im Garprogramm etwa ein Betriebsdruck als maximaler Wert von 0,8 bar Überdruck eingestellt, entspricht dies einem Druck von 1,8 bar auf Meereshöhe, so dass sich ein Schwellenwert Sw₁ von circa 1,81 bar ergibt.

Beim Erreichen eines ersten Schwellenwertes Sw₁ ("Betriebsdruck 1,81 bar"), dem Schwellenwert für den Betriebsdruck des Gargerätes 10, wird zunächst eine Druckentlastung mittels des Kugelventils 36 aktiviert. Die Druckentlastung mittels Kugelventil 36 wiederholt sich in der Regel mehrfach während des Garvorganges, wie die zeitabhängige Verlaufskurve 42 des Druckes zeigt. Auf diese Weise wirkt das Kugelventil 36 als Regelung für den Betriebsdruck.

Bei einem größeren Druckanstieg im Druckraum 26 und Erreichen eines zweiten Schwellenwertes Sw₂ ("Sicherheitsventil 1,9 bar") für das Sicherheitsventil 38 wird das Sicherheitsventil 38 ausgelöst.

In dem Ausnahmefall eines Versagens bzw. eines fehlerhaften Funktionierens des Druckabbauventils 36 und des Sicherheitsventils 38 kann es zu einem derartig hohen Druckanstieg im Druckraum 26 kommen, dass sogar die Gefahr einer "Explosion" des Gargerätes nicht mehr ausgeschlossen ist. Für diesen Fall ist ein dritter Schwellenwert Sw₃ ("Auslösedruck Dichtung 2,2 bar") für das Auslösen der erfindungsgemäßen mechanischen Sollversagensstelle (Dichtung 22) ausgelegt. Der Schwellenwert Sw₃ für das Auslösen der Sollversagensstelle ist notwendigerweise niedriger vorgegeben, als die Druckfestigkeit Df ("Druckfestigkeit Gargerät > 2,5 bar") des Gargerätes 10 definiert ist.

Bevorzugt liegt der Schwellenwert Sw₃ für das Auslösen der erfindungsgemäßen mechanischen Sollversagensstelle, also der Dichtung 22, deutlich unter der Druckfestigkeit Df des Druckraums, also des Garraums des Gargerätes.

### Bezugszeichenliste

- 10: Gargerät
- 12: Gargerätevorderseite
- 14: Gargeräterückseite
- 16: Tiegel
- 18: Deckel
- 20: Schürze
- 22: Dichtung / Dichtring
- 24: Verriegelungsvorrichtung
- 26: Druckraum
- 28: Druckabbauleitung Druckabbauventil

- 30: Druckabbauleitung Sicherheitsventil
- 32: Drucksensor
- 36: Druckabbauventil
- 38: Sicherheitsventil

- 40: Wrasen-Ableitung zur Gargeräterückseite
- 42: Verlaufskurve des Druckes im Bereich der Druckentlastung durch das Kugelventil

- Df: Druckfestigkeit des Druckraums des Gargerätes
- Sw₁: Erster Schwellenwert
- Sw₂: Zweiter Schwellenwert
- Sw₃: Dritter Schwellenwert

## Patentansprüche

1. Gargerät (10) zum Garen einer flüssigen oder einer einen hohen Flüssigkeitsanteil enthaltenden Speise, welches eine Gargerätevorderseite (12) und eine Gargeräterückseite (14) aufweist,
mit folgenden Elementen:
einem Tiegel (16),
einem Deckel (18) für den Tiegel (16),
einem Druckraum (26) in dem Tiegel (16) mit einer Druckfestigkeit,
mindestens einer Schutzeinrichtung, und
einer Verriegelungsvorrichtung (24),
wobei zwischen Druckraum (26) und Deckel (18) konstruktiv eine mechanische Sollversagensstelle vorhanden ist, die als eine ganz oder teilweise umlaufende Dichtung (22) ausgebildet ist, wobei ein Auslösen der mechanischen Sollversagensstelle erfolgt, wenn ein auf die Dichtung (22) einwirkender Druck aus dem Druckraum (26) einen vorgegebenen Schwellenwert (Sw₃) übersteigt, derart, dass die ganz oder teilweise umlaufende Dichtung (22) in zumindest einem Teilbereich aus ihrer abdichtenden Position herausgedrückt wird, wodurch der Überdruck entweicht,
wobei der vorgegebene Schwellenwert (Sw₃) einem Überdruck im Druckraum (26) entspricht, der geringer ist als ein Überlastdruck der Verriegelungsvorrichtung (24) oder ein Grenzbereich der Druckfestigkeit des Druckraumes (26),
**dadurch gekennzeichnet,**
**dass** die zwischen dem Druckraum (26) und dem Deckel (18) als mechanische Sollversagensstelle angeordnete Dichtung (22) ein elastisches Material aufweist, wobei die Dichtung (22) derart ausgestaltet ist, dass sie bogenförmig in Druckrichtung zeigt und bei einem Druck gleich oder größer als der dritte Schwellenwert (Sw₃) nach außen überklappt,
**dass** der Deckel (18) so ausgebildet ist, dass er sich bei steigendem Druck im Druckraum (26) im Tiegel (16) minimal elastisch verformt, wobei sich durch die Verformung das Spaltmaß der Dichtung (22) an zumindest einer Stelle vergrößert, und
**dass** die Dichtung (22) derart ausgestattet ist, dass sie bei einem Druck gleich oder größer als der dritte Schwellenwert (Sw₃) zuerst an dieser Stelle nach außen klappt.

2. Gargerät nach Anspruch 1, **dadurch gekennzeichnet, dass** die Gargerätevorderseite (12) eine Schürze (20) aufweist, in die die Verriegelungsvorrichtung (24) integriert ist.

3. Gargerät nach Anspruch 1 oder 2, **dadurch gekennzeichnet, dass** die als Dichtung (22) ausgebildete mechanische Sollversagensstelle bei einer Drucküberlastung zuerst an der Gargeräterückseite (14) auslöst.

4. Gargerät nach einem der vorstehenden Ansprüche, **dadurch gekennzeichnet, dass**
- ein Drucksensor (32) vorgesehen ist, -
- mehrere Schutzeinrichtungen vorgesehen sind,
- für ein Auslösen der Schutzeinrichtungen (36, 38, 22) mittels Verwendung des Drucksensors (32) des Gargeräts (10) mindestens drei voneinander unterschiedliche Schwellenwerte für den auf die Schutzeinrichtungen (36, 38, 22) einwirkenden Druck vorgegeben sind,
wobei
a) jeder Schutzeinrichtung (36, 38, 22) nur einer der drei unterschiedlichen Schwellenwerte zugeordnet ist;
b) der erste Schwellenwert in einer Gerätesteuerung hinterlegt ist;
c) ein Sicherheitsventil (38) als weitere Schutzeinrichtung vorgesehen ist und so ausgebildet ist, dass es bei Erreichen des zweiten Schwellenwertes auslöst, und
d) die Konstruktion der als Dichtung (22) ausgebildeten mechanischen Sollversagensstelle derart ausgestaltet ist, dass ihre mechanische Auslösung bei Erreichen des dritten Schwellenwertes für den Druck erfolgt.

5. Gargerät nach einem der vorstehenden Ansprüche, **dadurch gekennzeichnet, dass**
- ein Druckabbauventil (36) als weitere Schutzeinrichtung für einen Druckabbau vorgesehen ist,
- die Schutzeinrichtungen (36, 38, 22) derart ausgestaltet sind, dass bei einem Ansteigen des Druckes von einem niedrigeren Wert zu einem höheren Wert die Schutzeinrichtungen (36, 38, 22) in der Reihenfolge ausgelöst werden:
a) bei einem ersten Schwellenwert (Sw₁) das Druckabbauventil (36) für einen Druckabbau;
b) bei einem zweiten, gegenüber dem ersten höheren, Schwellenwert (Sw₂) das Sicherheitsventil (38), und
c) bei einem dritten, gegenüber dem zweiten höheren, Schwellenwert (Sw₃) die als Dichtung (22) ausgebildete mechanische Sollversagensstelle,
c1) wobei der Schwellenwert (Sw₃) für das Auslösen der mechanischen Sollversagensstelle (22) niedriger vorgegeben ist, als ein für eine Druckfestigkeit des Gargeräts (10) vorgegebener Wert.

6. Gargerät nach Anspruch 5, **dadurch gekennzeichnet, dass** das Druckabbauventil (36) ein Kugelventil ist.

7. Gargerät nach einem der vorhergehenden Ansprüche, **dadurch gekennzeichnet, dass**
a) die Schürze (20) an der Gargerätevorderseite (12) derart ausgestaltet ist, dass sie über die Dichtung (22) herüberreicht,
b) die in die Schürze (20) integrierte Verriegelungsvorrichtung (24) den Deckel (18) an der Gargerätevorderseite (12) auch bei einem hohen Druck stark auf die Dichtung (22) presst, und
c) sich bei einem Druck, deutlich höher als ein vorgegebener Arbeitsdruck, der Deckel (18) leicht nach oben wölbt und sich an der Gargeräterückseite (14) minimal anhebt, wodurch die Dichtung im Bereich der Gargeräterückseite (14) zuerst auslöst.

8. Verfahren zum Auslösen von Schutzeinrichtungen eines Gargerätes (10) zum Garen einer flüssigen oder einen hohen Flüssigkeitsanteil enthaltenen Speise unter erhöhtem Druck, mit folgenden Schritten:
Erhitzen der Speise in einem mit einem Deckel (18) verschlossenen Druckraum (26) des Gargeräts, wodurch im Druckraum ein Druck ansteigt, der sich bis auf einen Wert eines vorgegebenen Betriebsdruckes erhöht;
Druckentlasten des Druckraums (26) durch ein Druckabbauventil (36) als eine erste Schutzeinrichtung bei Erreichen eines ersten Schwellenwertes (Sw₁) für den Druck;
Auslösen eines Sicherheitsventils (38) als eine zweite Schutzeinrichtung bei einem weiteren Ansteigen des Druckes und Erreichen eines zweiten Schwellenwertes (Sw₂);
bei einem Ausfall der ersten und der zweiten Schutzeinrichtung und einem weiteren Ansteigen eines durch die erste und die zweite Schutzeinrichtung nach außen aus dem Druckraum (26) nicht mehr abführbaren Druckes, Auslösen einer konstruktiv vorgesehenen mechanischen Sollversagensstelle bei Erreichen eines dritten Schwellenwertes (Sw₃), wobei der dritte Schwellenwert (Sw₃) geringer ist, als ein vorgegebener Wert für eine Druckfestigkeit des Gargeräts (10), und wobei ein Auslösen der mechanischen Sollversagensstelle erfolgt, bevor eine Verriegelungsvorrichtung (24) des Gargerätes (10) überlastet wird,
wobei eine als mechanische Sollversagensstelle ausgebildete Dichtung (22), welche derart ausgestaltet ist, dass sie bogenförmig in Druckrichtung zeigt, bei Erreichen oder Überschreiten des dritten Schwellenwertes nach außen überklappt, und
minimal elastisches Verformen des Deckels (18) bei steigendem Druck, wobei sich durch die Verformung das Spaltmaß der Dichtung (22) an zumindest einer Stelle vergrößert und diese Stelle als erste nach Erreichen des dritten Schwellenwerts (Sw₃) nach außen klappt.

9. Verfahren nach Anspruch 8, **dadurch gekennzeichnet, dass** die als Dichtung (22) ausgebildete mechanische Sollversagensstelle an der Rückseite (14) des Gargerätes (10) auslöst.

## Claims

1. A cooking device (10) for cooking a liquid meal or a meal with a high liquid content, which provides a cooking-device front side (12) and a cooking-device rear side (14), with the following elements:
a pan (16),
a lid (18) for the pan (16),
a pressure chamber (26) in the pan (16) with a resistance to internal pressure,
at least one safety device, and
a locking device (24),
wherein, between the pressure chamber (26) and the lid (18), a predetermined mechanical weak-point is constructively present, which is embodied as a completely or partially peripheral seal (22), wherein a triggering of the predetermined mechanical weak-point occurs if a pressure acting on the seal (22) from the pressure chamber (26) exceeds a specified threshold value (Sw₃), in such a manner that the completely or partially peripheral seal (22) is pushed out of its sealing position at least in a partial region, thereby relieving the positive pressure, wherein the specified threshold value (Sw₃) corresponds to a positive pressure in the pressure chamber (26) which is less than an overload pressure of the locking device (24) or a limit range of the resistance to internal pressure of the pressure chamber (26),
**characterised in that**
the seal (22) arranged as a predetermined mechanical weak-point between the pressure chamber (26) and the lid (18) comprises an elastic material, wherein the seal (22) is embodied in such a manner that it points in a curved shape in the direction of compression and buckles outwards in the case of a pressure equal to or greater than the third threshold value (Sw₃),
that the lid (18) is embodied in such a manner that, in the case of a rising pressure in the pressure chamber (26) in the pan (16), it experiences minimal elastic deformation,
wherein, through the deformation, the gap dimension of the seal (22) is enlarged in at least one position, and
that the seal (22) is embodied in such a manner that, in the case of a pressure equal to or greater than the third threshold value (Sw₃), it first buckles outwards at this position.

2. The cooking device according to claim 1,
**characterised in that**
the cooking-device front side (12) provides an apron (20) in which the locking device (24) is integrated.

3. The cooking device according to claim 1 or 2,
**characterised in that**,
in the case of a pressure overload, the predetermined mechanical weak-point embodied as a seal (22) is first triggered at the cooking-device rear side (14).

4. The cooking device according to any one of the preceding claims,
**characterised in that**
- a pressure sensor (32) is provided,
- several safety devices are provided,
- for a triggering of the safety devices (36, 38, 22) through the use of the pressure sensor (32) of the cooking device (10), at least three mutually different threshold values are specified for the pressure acting on the safety devices (36, 38, 22).
wherein
a) only one of the three different threshold values is assigned to each safety device (36, 38, 22) ;
b) the first threshold value is stored in a device control unit;
c) a safety valve (38) is provided as a further safety device and is embodied in such a manner that it is triggered upon reaching the second threshold value, and
d) the construction of the predetermined mechanical weak-point embodied as the seal (22) is embodied in such a manner that its mechanical triggering occurs when the third threshold value for the pressure is reached.

5. The cooking device according to any one of the preceding claims,
**characterised in that**
- a pressure relieving valve (36) is provided as a further safety device for a pressure reduction,
- the safety devices (36, 38, 22) are embodied in such a manner that, in the case of an increase of the pressure from a relatively low value to a relatively higher value, the safety devices (36, 38, 22) are triggered in sequence:
a) in the case of a first threshold value (Sw₁), the pressure relieving valve (36) for a pressure reduction;
b) in the case of a second threshold value (Sw₂) relatively higher than the first, the safety valve (38), and
c) in the case of a third threshold value (Sw₃) relatively higher than the second, the predetermined mechanical weak-point embodied as the seal (22),
cl) wherein the threshold value (Sw₃) for the triggering of the predetermined mechanical weak-point (22) is specified lower than a value specified for a resistance to internal pressure of the cooking device (10).

6. The cooking device according to claim 5,
**characterised in that**
the pressure relieving valve (36) is a ball valve.

7. The cooking device according to any one of the preceding claims,
**characterised in that**
a) the apron (20) on the cooking-device front side (12) is embodied in such a manner that it projects beyond the seal (22),
b) the locking device (24) integrated in the apron (20) presses the lid (18) on the cooking-device front side (12) firmly onto the seal (22) even in the case of a high pressure, and
c) at a pressure significantly higher than a specified operating pressure, the lid (18) bulges slightly upwards and is raised minimally at the cooking-device rear side (14), so that the seal is released first in the region of the cooking-device rear side (14).

8. A method for triggering safety devices of the cooking device (10) for cooking a liquid meal or a meal with a high liquid content under increased pressure, with the following steps:
heating the meal in a pressure chamber (26) of the cooking device sealed with a lid (18), so that a pressure within the pressure chamber increases, rising up to a value of a specified operating pressure;
pressure reduction of the pressure chamber (26) through the pressure relieving valve (36) as a first safety device upon reaching a first threshold value (Sw₁) for the pressure;
triggering of a safety valve (38) as a second safety device in the case of a further increase of the pressure and a reaching of a second threshold value (Sw₂) ;
in the case of a failure of the first and the second safety device and a further increase of a pressure no longer removable to the outside of the pressure chamber (26) through the first and the second safety device, a triggering of a constructively provided, predetermined mechanical weak-point upon reaching a third threshold value (Sw₃), wherein the third threshold value (Sw₃) is lower than a specified value for a resistance to internal pressure of the cooking device (10), and wherein a triggering of the predetermined mechanical weak-point occurs before a locking device (24) of the cooking device (10) is overloaded,
wherein a seal (22) embodied as a predetermined mechanical weak-point, which is embodied in such a manner that it points in a curved shape in the direction of compression, buckles outwards upon reaching or overshooting the third threshold value, and
minimally elastic deformation of the lid (18) in the case of a rising pressure, wherein the gap dimension of the seal (22) is enlarged through the deformation at least at one position, and this position first buckles outwards upon reaching the third threshold value (Sw₃).

9. The method according to claim 8,
**characterised in that**
the predetermined mechanical weak-point embodied as the seal (22) is triggered at the rear side (14) of the cooking device (10).

## Revendications

1. Appareil de cuisson (10) pour la cuisson d'un aliment liquide ou qui renferme une part élevée de liquide, qui présente une face avant (12) d'appareil de cuisson et une face arrière (14) d'appareil de cuisson,
comprenant les éléments suivants :
un creuset (16),
un couvercle (18) pour le creuset (16),
un compartiment sous pression (26) dans le creuset (16) avec une résistance à la pression,
au moins un dispositif de protection, et
un dispositif de verrouillage (24),
un point de défaillance de consigne mécanique étant prévu au plan de la construction entre le compartiment sous pression (26) et le couvercle (18), lequel point est réalisé sous forme d'un joint (22) totalement ou partiellement périphérique, un déclenchement du point de défaillance de consigne mécanique s'effectuant lorsqu'une pression du compartiment sous pression (26), exercée sur le joint (22), dépasse une valeur de seuil (Sw₃) prédéfinie, de telle sorte que, dans au moins une zone partielle, le joint (22) totalement ou partiellement périphérique est chassé de sa position d'étanchéité, la surpression s'échappant de ce fait, la valeur de seuil (Sw₃) prédéfinie correspondant à une surpression dans le compartiment sous pression (26), qui est plus faible qu'une pression de surcharge du dispositif de verrouillage (24) ou une plage limite de la résistance à la pression du compartiment sous pression (26),
**caractérisé en ce que**
le joint (22), disposé entre le compartiment sous pression (26) et le couvercle (18) en tant que point de défaillance de consigne mécanique, présente un matériau élastique, le joint (22) étant configuré de telle sorte qu'il est orienté en forme d'arc dans la direction de pression et se rabat vers l'extérieur en présence d'une pression égale ou supérieure à la troisième valeur de seuil (Sw₃),
le couvercle (18) est réalisé de sorte qu'il est soumis à une déformation minimale élastique sous l'effet d'une hausse de pression dans le compartiment sous pression (26) du creuset (16), la dimension de l'interstice de la garniture (22) augmentant en au moins un endroit par la déformation, et
le joint (22) est configuré de telle sorte qu'il se rabat vers l'extérieur d'abord en cet endroit en présence d'une pression égale ou supérieure à la troisième valeur de seuil (Sw₃) .

2. Appareil de cuisson selon la revendication 1, **caractérisé en ce que** la face avant (12) de l'appareil de cuisson présente un tablier (20), dans lequel est intégré le dispositif de verrouillage (24).

3. Appareil de cuisson selon l'une des revendications 1 et 2, **caractérisé en ce que** le point de défaillance de consigne mécanique, réalisé sous forme de joint (22), se déclenche d'abord sur la face arrière (14) de l'appareil de cuisson sous l'effet d'une surcharge de pression.

4. Appareil de cuisson selon l'une des revendications précédentes, **caractérisé en ce que**
- il est prévu un capteur de pression (32),
- plusieurs dispositifs de protection sont prévus,
- pour un déclenchement des dispositifs de protection (36, 38, 22) par utilisation du capteur de pression (32) de l'appareil de cuisson (10), au moins trois valeurs de seuil différentes les unes des autres sont prédéfinies pour la pression exercée sur les dispositifs de protection (36, 38, 22),
a) seule l'une des trois valeurs de seuil différentes étant associée à chaque dispositif de protection (36, 38, 22),
b) la première valeur de seuil étant consignée dans une commande d'appareil ;
c) une soupape de sûreté (38) étant prévue en tant que dispositif de protection supplémentaire et réalisée de sorte qu'elle déclenche lorsque la deuxième valeur de seuil est atteinte, et
d) la construction du point de défaillance de consigne mécanique, réalisé sous forme de joint (22), étant configurée de telle sorte que son déclenchement mécanique s'effectue lorsque la troisième valeur de seuil pour la pression est atteinte.

5. Appareil de cuisson selon l'une des revendications précédentes, **caractérisé en ce que**
- il est prévu une soupape de suppression de pression (36), en tant que dispositif de protection supplémentaire, pour une suppression de pression,
- les dispositifs de protection (36, 38, 22) sont configurés de telle sorte que, en présence d'une montée en pression d'une valeur plus basse à une valeur plus élevée, les dispositifs de protection (36, 38, 22) déclenchent dans l'ordre suivant :
a) la soupape de suppression de pression (36) pour une suppression de pression sous l'effet d'une première valeur de seuil (Sw₁) ;
b) la soupape de sûreté (38) sous l'effet d'une deuxième valeur de seuil (Sw₂) plus élevée que la première, et
c) le point de défaillance de consigne mécanique, réalisé sous forme de joint (22), sous l'effet d'une troisième valeur de seuil (Sw₃) plus élevée que la deuxième,
c1) la valeur de seuil (Sw₃) pour le déclenchement du point de défaillance de consigne mécanique (22) étant prédéfinie à une valeur plus basse qu'une valeur prédéfinie pour une résistance à la pression de l'appareil de cuisson (10).

6. Appareil de cuisson selon la revendication 5, **caractérisé en ce que** la soupape de suppression de pression (36) est une soupape sphérique.

7. Appareil de cuisson selon l'une des revendications précédentes, **caractérisé en ce que**
a) le tablier (20) sur la face avant (12) de l'appareil de cuisson est configuré de telle sorte qu'il passe par-dessus le joint (22),
b) le dispositif de verrouillage (24), intégré dans le tablier (20), presse fortement le couvercle (18) sur le joint (22), sur la face avant (12) de l'appareil de cuisson, également en présence d'une pression élevée, et
c) sous l'effet d'une pression, nettement supérieure à une pression de travail prédéfinie, le couvercle (18) se cintre légèrement vers le haut et se soulève de façon minimale sur la face arrière (14) de l'appareil de cuisson, le joint déclenchant d'abord dans la zone de la face arrière (14) de l'appareil de cuisson.

8. Procédé de déclenchement de dispositifs de protection d'un appareil de cuisson (10) destiné à la cuisson sous pression élevée d'un aliment liquide ou renfermant une part élevée de liquide, comprenant les étapes suivantes :
chauffage de l'aliment dans un compartiment sous pression (26), fermé par un couvercle (18), de l'appareil de cuisson, une pression, qui s'élève jusqu'à une valeur d'une pression de service prédéfinie, augmentant de ce fait dans le compartiment sous pression ;
décompression du compartiment sous pression (26) par une soupape de suppression de pression (36) en tant que premier dispositif de protection, lorsqu'une première valeur de seuil (Sw₁) pour la pression est atteinte ;
déclenchement d'une soupape de sûreté (38) en tant que deuxième dispositif de protection, en présence d'une hausse supplémentaire de la pression et d'atteinte d'une deuxième valeur de seuil (Sw₂) ;
en présence d'une défaillance du premier et du deuxième dispositifs de protection et d'une hausse supplémentaire d'une pression, qui n'est plus évacuable vers l'extérieur du compartiment sous pression (26) par le premier et le deuxième dispositifs de protection, déclenchement d'un point de défaillance de consigne mécanique prévu au plan de la construction, lorsqu'une troisième valeur de seuil (Sw₃) est atteinte, la troisième valeur de seuil (Sw₃) étant inférieure à une valeur prédéfinie pour une résistance à la pression de l'appareil de cuisson (10), et un déclenchement du point de défaillance de consigne mécanique s'effectuant avant la surcharge d'un dispositif de verrouillage (24) de l'appareil de cuisson (10),
un joint (22), réalisé en tant que point de défaillance de consigne mécanique, étant configuré de telle sorte qu'il est orienté en arc dans la direction de pression, se rabat vers l'extérieur lorsque la troisième valeur de seuil est atteinte ou dépassée, et
déformation minimale élastique du couvercle (18) sous l'effet de la hausse de pression, la dimension de l'interstice du joint (22) augmentant en au moins un endroit par la déformation et cet endroit se rabattant en premier vers l'extérieur après que la troisième valeur de seuil (Sw₃) a été atteinte.

9. Procédé selon la revendication 8, **caractérisé en ce que** le point de défaillance de consigne mécanique, réalisé sous forme de joint (22), déclenche sur la face arrière (14) de l'appareil de cuisson (10).
